Europäisches Patentamt

European Patent Office  (11) Publication number: **0 106 925**
A1
Office européen des brevets

(12) **EUROPEAN PATENT APPLICATION**

(21) Application number: **82305694.0**

(22) Date of filing: **27.10.82**

(51) Int. Cl.³: **B 25 H  3/00,** B 23 Q  7/10,
B 65 G  60/00

(43) Date of publication of application: **02.05.84**
**Bulletin 84/18**

(71) Applicant: **HOLDERS MARKETING COMPANY LIMITED,
85 Ballards Lane, London N3 1XU (GB)**

(72) Inventor: **Weinreich, Rudolf Walter, 199 Holders Hill
Road, London NW7 1ND (GB)**

(74) Representative: **Meeks, Frank Burton et al,
Urquhart-Dykes & Lord 47 Marylebone Lane, London
W1M 6DL (GB)**

(84) Designated Contracting States: **FR IT NL SE**

(54) **A tool holder.**

(57) A holder for drills or similar tools has a rectangular
body (2) with longitudinally spaced passages extending
therethrough between its upper and lower surfaces (10 and
12). Each passage has coaxial portions of greater and lesser
cross-section to define a shoulder which supports a tool
located in the passage. Teeth (22) are formed in the lower
surface (12) to cooperate with drive means to transfer the
holder between a storage and one or more operational
stations and to move the holder through the operational
stations. Guide slots (24) are formed in the longer sides of
the body (2) to retain the holder in its required guide path
during transfer.

- 1 -

## TITLE

"A Tool Holder"

## TECHNICAL  FIELD

The present invention relates to a holder for an elongate tool having a working head portion coaxial with and of greater or smaller cross-section than its shank portion.  In this Specification the aforementioned elongate tool will be referred to as "a tool of the type described". The invention is particularly concerned with, but not restricted to, a holder for drills or small cutting tools having the aforementioned construction.

With many industrial operations it is desirable for tools of the type described to be sold, transported, stored and processed while retained in the holder.  Difficulties arise in providing these facilities with previously proposed holders, and it is an aim of the invention to alleviate this difficulty.

According to the present invention there is provided a holder for tools of the type described, said holder comprising a body having extending therein a plurality of passages to retain the said tools with the head portions projecting from the body, each passage being adapted to receive the tool shank portion and to support the tool, guide means to guide the holder through stations, and engagement means to cooperate with drive means to move the holder through said stations.

Each passage may have coaxial portions of greater and lesser cross-section;  the greater cross-section portion being adapted to receive the tool shank, and the lesser cross-section portion being adapted to receive a tool removal member.

0106925

- 2 -

The passages may be shaped to facilitate the ready automatic removal and insertion of the tools from and into the holder. This shaping may take the form of chamfers located on the opposite remote ends of the passages.

In a preferred embodiment, the holder body may be elongate withthe passages spaced along the direction of the body longitudinal axis, with each passage perpendicular to said longitudinal axis. The guide means may comprise slots, steps or projections extending along opposite longer sides of the body parallel to the said longitudinal axis. The engagement means may comprise teeth, bosses, slots or pegs which are cut into or moulded with the holder body so as to cooperate with a suitable mechanism to move the holder so that each tool may be located in sequence at a required station. In order to reduce the wear of the passage shoulders, wear resistant inserts or bushes may be located on or at these shoulders. If desired, a seating may be located around the upper surface of the holder body to receive a detachable lid.

## FIGURES IN THE DRAWINGS

Embodiments of the invention will now be described by way of example with reference to the accompanying illustrative drawing in which:-

FIGURE 1 is a side elevation, partly in section, of one tool holder of the invention,

FIGURE 2 is a sectional view along the line 2 - 2 of Figure 1,

FIGURE 3 is a plan view of the holder of Figure 1,

FIGURE 4 is a sectional view along the line 2 - 2 of a modified tool holder of the invention,

FIGURE 5 is a plan view of another tool holder of the invention,

0106925

- 3 -

FIGURE 6 is a side elevation partly in section of the holder of Figure 5,

FIGURE 7 is a view from below of the holder of Figure 5,

FIGURE 8 is a sectional view along the line 8 - 8 of Figure 6, and

FIGURE 9 is a sectional view similar to Figure 8 of a modified holder.

## DETAILED DESCRIPTION OF THE DRAWINGS

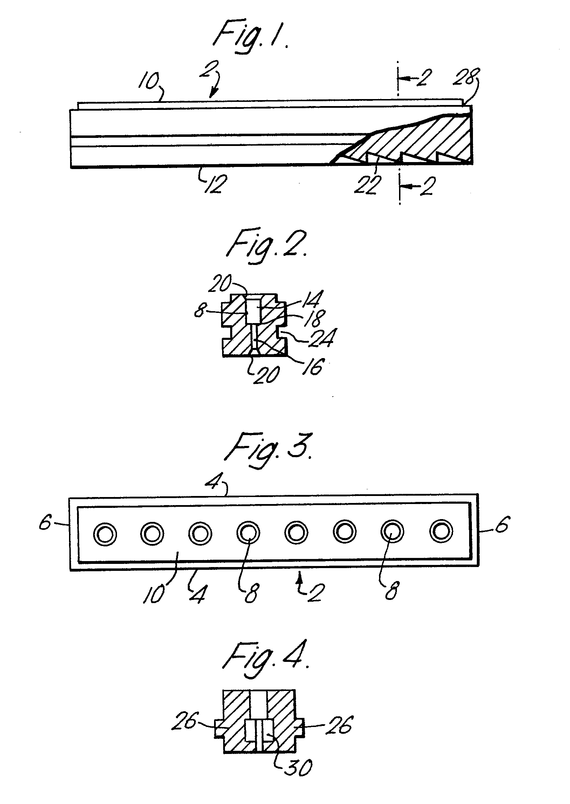

Referring to Figures 1 to 3, one tool holder of the invention includes a generally rectangular body 2 having longer sides 4 and shorter ends 6. A plurality of tool retaining passages 8 extend through the body 2 between the body upper and lower surfaces 10 and 12. These passages are spaced along the longitudinal axis of the body 2, and the passages are perpendicular to the longitudinal axis.

Each passage has coaxial portions 14 and 16 of greater and lesser cross-section respectively. The cross-section of the portion 14 is dimensioned to make a sliding fit with the shank of a drill or like tool retained in the passage. These passage portions 14 and 16 define a shoulder 18 in each passage 8 to support the shank of a drill located in the passage. If desired, bushes or inserts of suitable wear resistant material may be located on these shoulders 18. The portion 16 is adapted to receive a tool removal member which can be inserted therein to remove the tool from the portion 14.

The holder is intended for use with drills which are dimensioned so that the heads of the retained drills project from the body upper surface 12. A retained drill may be removed from the holder by gripping the projecting drill head with a suitable tool and pulling out the drill, or preferably by pushing out the drill with a thin removal member pushed through the lower surface 12 into the passage portion 16. In order to assist in the removal and replacement of retained drills chamfers 20 may be provided at opposite ends of the passages 8 which are spaced equidistantly along the body 2.

The holder is precision made from a plastics, metal or other solid material, and is intended to hold a plurality of drills or generally similar cutting tools which may be sold, transported, stored and processed while retained in the holder. The holders themselves can be stored in suitable racks which allow easy access and classification of the retained tools. Relevant information about the retained tools may be displayed on the holder, and the holders can be colour coded to simplify selection of the required tools. In addition, the holders may be designed to enable a number of operations to be carried out automatically on the retained tools, such as for example inspection, cleaning, re-sharpening and fitting of location collars.

In some applications, it is desirable to transfer the holder and the retained tools between a storage station and one or more operational stations, and to move the holder and the retained tools through the operational stations. To enable this movement to be carried out, teeth 22 are formed in the lower surface 12 of the holder to engage a suitable drive means. Instead of the teeth 22 suitable slots or pegs may be located on or formed in the holder body 2 to engage the drive means. To ensure that the holder moves along a desired path during its movement longitudinal guide slots 24 extend along the body sides 4 to cooperate with associated projections on either side of the selected guide path.

The upper portion of the body 2 is recessed to form a circumferential seating 28 for a detachable lid for the body 2.

- 5 -

In operation, the holder lid is removed from the seating 28 and drills or similar tools are inserted into all or some of the passages 8. If desired, the lid can be replaced. The holder is then stored in a suitable rack, or arranged to cooperate with a suitable drive means to move the holder and the retained tools between a storage station and one or more operational stations, and through the operational stations.

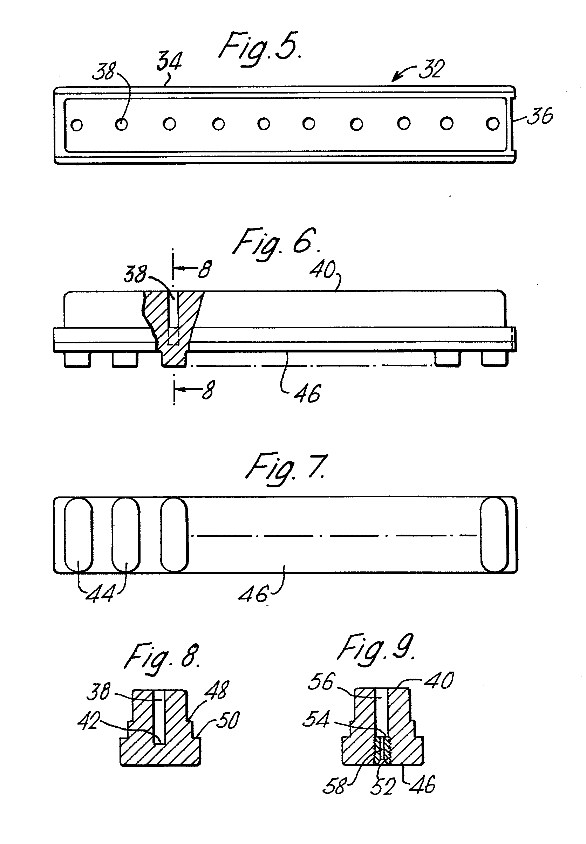

In a modified tool holder illustrated in Figure 4, longitudinal projections 26 project from and extend along the sides 4 and 6 to cooperate with suitable guiding means by the side of the selected guide path. The shoulder 18 of each passage 8 is formed by a metal insert 30 located in the body 2. This insert 30 has a tubular passage extending therethrough which constitutes the upper part of the holder passage portion 16. If desired, the insert 30 can also be designed to form the lower part of the passage portion 14. In manufacture, the main part of the tool holder body 2 is moulded round the inserts 30.

Referring to Figures 5 to 8, another tool holder of the invention includes a generally rectangular body 32 having longer sides 34 and shorter ends 36. A plurality of tool retaining passages 38 extend part-way into the body 2 from the body upper surface 40. These passages 38 are spaced along the longitudinal axis of the body 32, and the passages 38 are perpendicular to the longitudinal axis of the body 32.

The cross-section of each passage 38 is dimensioned to make a sliding fit with the shank of a drill or like tool retained in the passage. The shank of a drill located in the passage 38 is supported by the passage lower end 42. The holder 32 is intended for use with drills which are dimensioned so that the heads of the retained drills project from the body upper surface 40.

- 6 -

The operation of this tool holder is the same as the tool holder of Figures 1 to 3. To enable this tool holder to carry out its required movement between and through the appropriate stations, a series of longitudinally spaced transversely extending bosses 44 are located on the lower surface 46 of the tool holder body 32. These bosses 44 project from the body lower surface 46 to engage a suitable drive means. If desired, these bosses 44 may stop short of the body longer sides 34.

To ensure that the holder moves along a desired path during its movement, longitudinal guide steps 48 and 50 extend along the body sides 34 to cooperate with associated formations or recesses on either sides of the selected guide path.

In a modified version of this tool holder illustrated in Figure 9, each passage 38 extends completely through the body 32 between its upper and lower surfaces 40 and 46. A tubular metal insert 52 is located in the lower region of each passage 38 to define a shoulder 54 and to divide the passage 38 into coaxial portions 56 and 58 of greater and lesser cross-section respectively. The passage portion 56 is dimensioned to make a sliding fit with the shank of a drill or like tool retained in the passage portion 56, and the passage portion 58 is adapted to receive a tool removal member which can be inserted therein to remove the tool from the passage portion 56. The shoulder 54 supports the shank of a tool located in the passage portion 56. In manufacture, the main part of the tool holder is moulded round the inserts 52.

It will be appreciated that the tool holders illustrated in Figures 5 to 9 are modifications of the tool holders of Figures 1 to 4, and that all the tool holders disclosed in this Specification have the same general function and operation.

CLAIMS

1. A holder for tools of the type described, said holder comprising a body having extending therein a plurality of passages to retain the said tools with the head portions projecting from the body, each passage being adapted to receive the tool shank portion and to support the tool, guide means to guide the holder through stations, and engagement means to cooperate with drive means to move the holder through said stations.

2. A tool holder as claimed in Claim 1, in which each passage extends through the tool body and has coaxial portions of greater and lesser cross-section, the greater cross-section portion being adapted to receive the tool shank, and the lesser cross-section portion being adapted to receive a tool removal member.

3. A tool holder as claimed in Claim 2, in which the passages are shaped to facilitate the ready removal of the tools from the holder.

4. A tool holder as claimed in Claim 2 or Claim 3, in which the remote ends of the passages are chamfered.

5. A tool holder as claimed in any preceding Claim, in which the body is elongate with the passages spaced along the direction of the body longitudinal axis, with each passage perpendicular to the said longitudinal axis.

6. A tool holder as claimed in Claim 5, in which the guide means comprises slots extending along opposite longer sides of the body parallel to the said longitudinal axis.

7. A tool holder as claimed in Claim 5, in which the guide means comprises projections extending along opposite longer sides of the body parallel to the said longitudinal axis.

8. A tool holder as claimed in Claim 5, in which the guide means comprises steps extending along opposite longer sides of the body parallel to the said longitudinal axis.

9.    A tool holder as claimed in any preceding Claim, in which the engagement means comprises indexing means located on the surface of the body.

10.    A tool holder as claimed in Claim 9 in which the engagement means comprises a series of longitudinally spaced teeth.

11.    A tool holder as claimed in Claim 9, in which the engagement means comprises a series of longitudinally spaced bosses.

12.    A tool holder as claimed in any preceding Claim, in which the body includes the seating for a detachable lid.

13.    A tool holder as claimed in Claim 2 and any Claim dependent thereon, including wear resistant inserts located on the passage shoulders.

1/2

Fig. 1.

Fig. 2.

Fig. 3.

Fig. 4.

Fig. 5.

Fig. 6.

Fig. 7.

Fig. 8.

Fig. 9.

# 0106925

European Patent Office

## EUROPEAN SEARCH REPORT

Application number

EP 82 30 5694

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | NL-A- 249 160 (PHILIPS) *Figures 2+3* | 1-13 | B 25 H 3/00 B 23 Q 7/10 B 65 G 60/00 |
| Y | DE-A-2 442 200 (REISHAUER) *Figures 9,9a,10,10a* | 1-13 | |
| A | US-A-3 854 602 (BLANK) *Figures 3-6* | 1,5,9-11 | |
| A | DE-A-2 747 713 (LIEBAUG & NIMSCHOLZ) *Figure 1* | 2,3 | |
| A | US-A-4 113 090 (CARSTENS) | 2,3 | |
| A | DE-A-2 065 594 (UNION CARBIDE) *Claim 1; figures 1+2* | 10 | **TECHNICAL FIELDS SEARCHED (Int. Cl. ³)** |
| A | US-A-2 842 260 (MOLITOR) *Figure 8* | 12 | B 65 D B 25 H B 65 G B 23 Q |
| A | DE-U-7 009 456 (HANEL) | | |
| A | US-A-3 791 509 (JONES) | | |
| | --- -/- | | |

The present search report has been drawn up for all claims

| Place of search THE HAGUE | Date of completion of the search 26-04-1983 | Examiner KUHN E.F.E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

## European Patent Office

## EUROPEAN SEARCH REPORT

Application number

EP 82 30 5694

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE-A-2 064 128 (UNION CARBIDE) --- | | |
| A | DE-B-1 126 703 (GAUTHIER) ----- | | |
| | | | TECHNICAL FIELDS SEARCHED (Int. Cl. ³) |

The present search report has been drawn up for all claims

| Place of search THE HAGUE | Date of completion of the search 26-04-1983 | Examiner KUHN E.F.E. |
|---|---|---|